# DEMANDE DE BREVET EUROPEEN

(11) **EP 3 730 244 A1**
(43) Date de publication de la demande: **28.10.2020**
(21) Numéro de dépôt: 20170807.0
(22) Date de dépôt: 22.04.2020
(51) Int. Cl.: B23P 19/06, B25B 23/142, B25B 23/145, B25B 23/147, G04D 1/00, G04D 3/00, G01L 3/14, G01L 5/24

(54) **DISPOSITIF ET MÉTHODE DE VISSAGE**

(30) Priorité: 26.04.2019 CH 5612019
(71) Demandeur: Ciposa SA, 2068 Hauterive (CH)
(72) Inventeur: Rieger, Vincent, 2036 Cormondrèche (CH); Ermenault, Olivier, 1422 Grandson (CH); Stauffer, Florian, 2052 Fontainemelon (CH)
(74) Mandataire: P&TS SA (AG, Ltd.)

(57) **Abrégé**

Dispositif de vissage motorisé (1), comprenant un axe d'entrainement (2), un axe de vissage (3) et un dispositif déformable (5) solidaire des axes d'entrainement et de vissage (2, 3), et un capteur de position angulaire (6) de l'outil de vissage.

Méthode de vissage où la position angulaire de l'outil de vissage est considérée.

## Description

### Domaine technique

La présente invention concerne un dispositif de vissage adapté par exemple à l'assemblage de composants horlogers. En particulier le dispositif de serrage ici décrit permet de contrôler le couple de serrage de la vis.

La présente invention concerne aussi un dispositif permettant de contrôler l'orientation de la tête de vis sur le produit assemblé.

### Etat de la technique

Dans le domaine horloger, les composants sont souvent vissés les uns aux autres. Cela nécessite d'appliquer un couple de serrage adéquat pour le bon maintien des pièces les unes avec les autres. Une valeur déterminée du couple de serrage est donc souvent le seul paramètre considéré.

La position de la tête de vis, résultant de la valeur de serrage optimale, est quant à elle aléatoire. Dans un assemblage comportant plusieurs vis visibles, l'orientation des têtes de vis apparaît alors comme disparate, ce qui peut être perçu comme un défaut esthétique. Dans les assemblages comportant une seule vis visible, les exigences esthétiques peuvent inciter à orienter la tête de vis de manière reproductible dans une position prédéfinie par rapport à l'ensemble de l'objet assemblé.

Pour des raisons de productivité, il peut également être avantageux d'orienter les têtes de vis toujours dans le même sens, de manière à ce que les outils de vissage et les têtes de vis soient toujours alignés.

Ces contraintes de position ne doivent cependant pas être au détriment des couples de serrage optimum des vis. Il y a donc matière à développer des solutions qui permettent à la fois un couple de serrage dans une plage déterminée et l'orientation reproductible des têtes de vis.

Il doit être en outre considéré que dans le domaine horloger, les couples de serrage doivent être mesurés avec précision, compte tenu de la taille réduites des pièces assemblées.

Le brevet CH709757 décrit un dispositif qui fonctionne par débrayage lorsqu'un couple de serrage de valeur prédéterminée est atteint. Le dispositif décrit dans ce document comporte un moyen d'accouplement non flexible obtenu par crabotage. Il ne contient aucun moyen de déterminer la position angulaire de la tête de vis.

Le brevet FR1396140 décrit un dispositif comportant un système d'aspiration pour manipuler la vis, et un système d'accouplement à friction réglable grâce à un ressort enroulé autour d'un arbre de serrage. La valeur de serrage est atteinte lorsque l'accouplement à friction patine. Ce système d'accouplement ne permet pas d'adapter la valeur du serrage dans une gamme acceptable, tout en permettant de maîtriser la position de la tête de vis.

Bien que la présente invention soit décrite pour une application horlogère, elle peut être mise en oeuvre pour d'autres produits manufacturés nécessitant un serrage de précision et devant satisfaire à des exigences esthétiques. La présente invention peut notamment être utilisée pour l'assemblage de lunettes, de bijoux, ou de dispositifs médicaux, la liste n'étant pas exhaustive.

### Bref résumé de l'invention

Un but de la présente invention est de pallier aux inconvénients précités. Il s'agit en particulier de produire un dispositif de vissage qui permette de contrôler le couple de serrage appliqué.

Dans un mode de réalisation préférentiel, le dispositif de serrage doit aussi permettre de contrôler l'orientation de la tête de vis.

Un objet de l'invention est un dispositif de vissage comprenant un axe d'entrainement et un axe de vissage, coaxial à l'axe d'entrainement et comprenant à son extrémité libre un outil de vissage. Le dispositif de vissage comporte en outre un dispositif déformable, solidaire des axes d'entrainement et de vissage et un capteur de position, permettant de déterminer le degré de déformation du dispositif déformable.

Le dispositif selon la présente invention comporte avantageusement en outre au moins un capteur de position angulaire de l'outil de vissage, ou de la tête de vis par rapport à l'assemblage du produit.

Le dispositif objet de l'invention est en outre muni d'une unité de traitement numérique, telle qu'un microprocesseur ou un circuit logique programmable (FPGA), connecté à un codeur de position et à un capteur de position angulaire.

Selon un mode de réalisation, le dispositif déformable est un ressort spirale, fixé sur les deux axes d'entrainement et de vissage, et comportant deux bras circulaires et flexibles. Le codeur de position peut comporter un couple de codeurs optiques solidaires chacun d'un des axes d'entrainement et de vissage. Alternativement, le codeur de position peut comporter un couple de codeurs optiques associés chacun à un des axes d'entrainement et de vissage.

Selon un autre mode de réalisation, le dispositif déformable est un système hydraulique, comprenant au moins deux chambres hydrauliques remplies d'un fluide hydraulique pourvues chacune d'un piston. Les pistons sont activés par un axe poussoir solidaire de l'un des axes d'entrainement et de vissage. Suivant ce mode de réalisation, le codeur de position comporte un piston activé par le fluide hydraulique des chambres hydrauliques et un palpeur.

Le dispositif objet de la présente invention comporte en outre un capteur de position angulaire, de préférence de type optique, permettant de déterminer la position angulaire de la tête de vis.

L'unité de traitement numérique, dans le dispositif objet de la présente invention, est en mesure de générer une commande d'arrêt du moteur sur la base des données fournies par le capteur de position angulaire, le codeur de position, ou les deux. L'unité de traitement numérique peut comporter à cet effet une mémoire, où sont stockées des couples de valeurs ou des plages de valeurs acceptables.

Le dispositif objet de la présente invention peut en outre comprendre un élément de préhension par aspiration des vis à visser.

La présente invention inclut une méthode de vissage automatique, comportant notamment une étape d'entrainement de l'axe d'entrainement par un moteur. La méthode comprend en outre la détermination du degré de déformation du dispositif déformable. De manière avantageuse, la méthode inclut la détermination de la position angulaire de l'outil de vissage. Les valeurs ainsi déterminées sont comparées avec un set de valeurs préétablies. Lorsque les paramètres de référence sont atteints, le vissage est alors considéré bien accompli.

La présente invention inclut également un ensemble de travail comprenant le dispositif de vissage décrit ci-après, un portique permettant le déplacement du dispositif de vissage, selon les axes x, y, et z, et accessoirement une table de travail où sont placées les pièces à assembler et un présentoir où les vis à visser sont mises à disposition du dispositif de vissage.

La présente invention est décrite plus en détails ci-dessous à l'aide des schémas suivants.

### Brève description des figures

Des exemples de mise en oeuvre de l'invention sont indiqués dans la description illustrée par les figures annexées :
- Figure 1 : Vue d'ensemble du dispositif de vissage avec le présentoir et la table de travail
- Figure 2a : vue en coupe du dispositif de vissage selon un mode de réalisation.
- Figure 2b : vue en coupe du dispositif de vissage selon un autre mode de réalisation.
- Figure 3 : vue agrandie du ressort spirale utilisé comme moyen d'accouplement
- Figure 4a : vue en coupe du système hydraulique.
- Figure 4b : vue en coupe du dispositif de vissage selon un autre mode de réalisation.

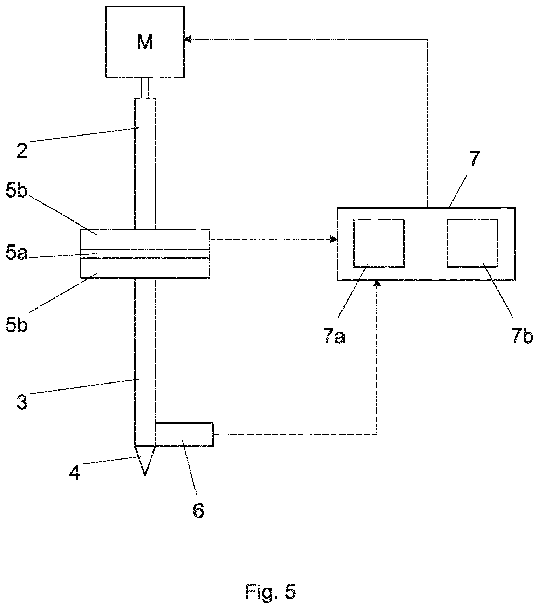

- Figure 5 : vue schématique du système d'information pilotant le dispositif de vissage.

### Exemple(s) de mode de réalisation de l'invention

La présente invention est relative à un dispositif de vissage **1** permettant d'appliquer un couple de serrage contrôlé, par exemple un couple dans une plage prédéterminée suffisante au bon maintien de la vis à visser **V** tout en évitant de l'endommager. Dans une variante, le dispositif permet aussi de contrôler l'orientation de la tête de vis **V** sur le produit assemblé.

Pour ce faire, le couple de serrage optimal **F** est défini par une plage de valeurs comportant une valeur de serrage minimale **F1** et une valeur de serrage maximale **F2.** La valeur de serrage **F1** correspond au couple de serrage minimal acceptable pour que le maintien des pièces assemblées soit réalisé. Le couple maximal **F2** correspond au couple de serrage qui ne doit pas être dépassé sous peine d'abimer les pièces assemblées où de provoquer des disfonctionnements après assemblage.

L'orientation de la tête de vis s'entend comme l'orientation de tout motif particulier visible sur la tête de vis **V.** En particulier, si la tête de vis comporte une fente adaptée pour l'insertion d'un outil de vissage **4,** alors l'orientation de la tête de vis sera relative à l'orientation de cette fente par rapport aux autres pièces visibles assemblées. L'orientation de la tête de vis est donc relative à une position angulaire d'un motif présent sur la tête de vis, quel que soit ce motif. Pour des raisons esthétiques, toutes les vis **V** d'une pièce circulaire peuvent par exemple être orientées vers le centre de cette pièce circulaire, signifiant que les fentes présentes sur les têtes des vis sont toutes orientées radialement vers le centre de la pièce circulaire. Dans une variante, toutes les vis peuvent être orientées de façon parallèle.

Le dispositif de vissage **1** selon l'invention comprend un axe d'entrainement **2.** L'axe d'entrainement **2** est relié à un moteur électrique **M** et permet de transmettre la force de rotation du moteur vers l'axe de vissage **3.** Une transmission par courroie peut être envisagée, bien que tout autre moyen de transmission puisse être considéré. Des réducteurs et moyens de transmission intermédiaires peuvent également être prévus. Le dispositif de vissage **1** est de préférence disposé en colonne, avec un axe d'entrainement **2** positionné de manière verticale. Il est de plus avantageusement combiné à un présentoir **P,** comportant les vis **V** à visser, et une table de travail **T,** de préférence horizontale, où sont présentés les éléments à assembler. Le dispositif de vissage **1** est alors mobile en translation entre le présentoir **P** et la table de travail **T,** par exemple grâce à un système de guidage. Un moyen de préhension **8** des vis **V** disposées dans le présentoir **P** permet au dispositif de vissage **1** de se munir de manière automatique d'une vis **V.** Le moyen de préhension peut être de tout type connu pour ce domaine technique. De préférence le moyen de préhension fonctionne par succion au niveau de l'outil de vissage **4.** Un orifice aménagé dans l'outil de vissage **4** permet alors de créer un vide par aspiration et de maintenir la tête de vis **V** en contact avec l'outil de vissage **4** pendant les mouvements du dispositif de vissage **1** entre le présentoir **P** et la table de travail **T.** Le dispositif de vissage **1** ou ses organes de vissage tels que l'axe d'entrainement **2** et l'axe de vissage **3** sont mobiles en translation verticale, de manière à pouvoir accompagner la vis **V** pendant le serrage.

Le dispositif **1** selon l'invention est pourvu d'un axe de vissage **3,** disposé coaxialement à l'axe d'entraînement **2,** par exemple dans la continuité de cet axe d'entrainement **2.** Suivant la disposition préférée en colonne, l'axe de vissage **3** est positionné verticalement, et permet de transmettre la force de rotation provenant de l'axe d'entrainement **2** à l'outil de vissage **4,** disposé à l'extrémité libre de l'axe de vissage **3.** La force de rotation est transmise de l'axe d'entrainement **2** vers l'axe de vissage **3** par l'intermédiaire d'un moyen d'accouplement **5.** Le moyen d'accouplement **5** a la particularité d'être déformable de manière élastique. Il peut notamment se déformer en fonction du couple de résistance qui s'oppose à la rotation de l'axe de vissage **3.** Lors d'une opération de vissage, le couple de résistance est minimal tant que la vis **V** progresse dans le filet. En conséquence la déformation du moyen d'accouplement **5** est minimale. Lorsque la vis **V** atteint sa position de blocage en fin de serrage, le couple de résistance augmente sensiblement et accentue la déformation du moyen d'accouplement **5,** jusqu'à atteindre un couple de serrage minimal **F1,** lequel est acceptable pour le maintien des pièces assemblées. Si l'opération de vissage est maintenue au-delà de ce couple de résistance, alors la déformation du moyen d'accouplement **5** s'accentue encore. Le couple de résistance peut ainsi atteindre une valeur **F2,** correspondant au couple maximal acceptable pour le serrage de la vis **V** considérée. Le dispositif de vissage **1** est alors stoppé pour éviter de dépasser le couple de serrage maximal acceptable **F2,** ce qui pourrait provoquer des dommages aux éléments assemblés. De manière avantageuse, le sens d'entrainement de l'axe d'entrainement **2** peut être inversé si la valeur **F2** du couple de serrage maximal est atteinte, de façon à maintenir le couple de serrage F inférieure à sa valeur maximale **F2.** A cet effet, le moteur **M** est réversible.

Grâce aux propriétés de déformation élastique du moyen d'accouplement **5,** le couple de serrage **F** est déterminé par le décalage angulaire entre les axes d'entrainement **2** et de vissage **3.** En d'autres termes, le moyen d'accouplement **5** a une raideur prédéterminée qui lui permet de se déformer d'un certain angle pour un couple de résistance donné. A un couple de serrage minimal **F1** correspond alors un angle de décalage minimal **A1.** A un couple de serrage maximal **F2** correspond un angle de décalage maximal **A2.** La valeur de serrage optimale est considérée atteinte lorsque l'angle de décalage **A** entre les axes d'entrainement **2** et de vissage **3** est compris entre les valeurs **A1** et **A2.**

Selon un mode de réalisation de l'invention, le moyen d'accouplement déformable **5a** est un ressort de type spirale **R** dont une extrémité est solidaire de l'un des axes d'entrainement **2** ou de vissage **3** et l'autre partie est solidaire de l'autre des deux axes. Les deux axes d'entrainement **2** et de vissage **3** sont donc libres de se décaler l'un par rapport à l'autre tout en restant solidaires l'un de l'autre. En particulier, le ressort **R** possède une zone centrale **Z1** (virole), laquelle peut servir de premier point de fixation **R1** à l'un des deux axes d'entrainement **2** ou de vissage **3.** Il possède en outre une partie flexible, tels que un ou plusieurs bras circulaires **Z2, Z3,** lesquels peuvent servir de second point de fixation **R2.** Plus particulièrement, chaque extrémité des bras **Z1, Z2** est pourvue d'un second point de fixation **R2.** Le second point de fixation permet de solidariser le ressort spiral à l'autre des deux axes d'entrainement **2** et de vissage **3.**

Les premiers **R1** et second **R2** points de fixation peuvent être identiques ou différents. Par exemple ils peuvent se composer chacun d'un orifice disposé sur le ressort spirale **R,** et d'un filetage sur l'axe de fixation, lequel peut être l'axe d'entrainement **2** ou l'axe de vissage **3,** de telle manière qu'une vis de fixation puisse y être vissée et fixer ainsi le ressort spirale **R** sur l'axe en question. D'autres moyens de fixation peuvent être utilisés tels qu'un collage ou une soudure, ou tout moyen équivalent.

Le décalage angulaire **A** entre les axes d'entrainement **2** et de vissage **3** peut être déterminé par des codeurs de positions **5b.** Une paire de codeurs de position **5b** peut alors être disposée de telle manière qu'une première partie des codeurs de position soit solidaire de l'un des axes d'entrainement **2** ou de vissage **3,** et que la partie complémentaire soit disposée en vis-à-vis, solidaire de l'autre des deux axes d'entrainement **2** ou de vissage **3.** Les deux codeurs de position **5b** coopèrent alors pour déterminer un angle de décalage **A** entre les deux axes d'entrainement **2** et de vissage **3.** Les codeurs de position **5b** peuvent être de type optique, ou magnétique, magnétorésistif ou de tout autre type connu permettant de déterminer un décalage angulaire.

La rigidité du ressort spiral **5a** est calibrée pour une certaine déformation en fonction d'un couple de serrage donnée. Le nombre de spires, la longueur des spires, l'épaisseur des spires sont des paramètres du ressort spirale **5a** qui permettent de l'adapter aux conditions requises. La déformation angulaire peut être par exemple de l'ordre de 0.0300, ou 0.0400, ou 0.0500, ou 0.0600 degré par mN/m. Une déformation précise de l'ordre de 0.0345 mN/m peut ainsi être calibrée.

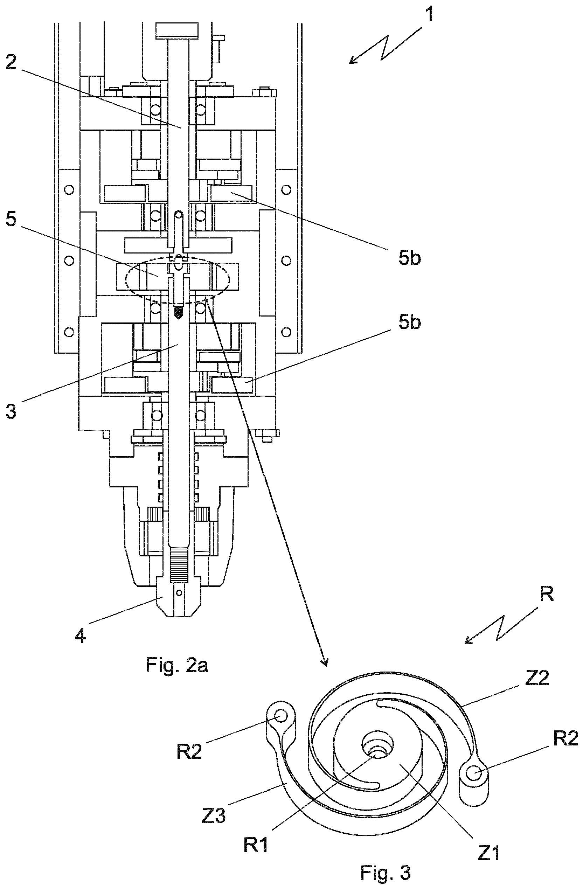

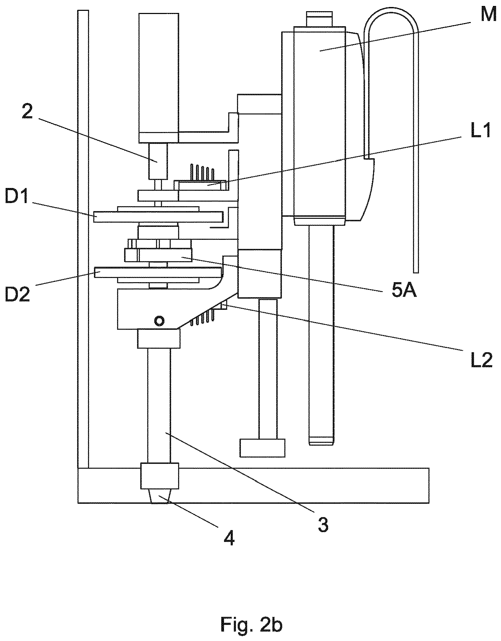

Selon un mode de réalisation préféré, le codeur de position **5b** est de type optique et comprend un disque optique comportant des motifs caractéristiques utilisés pour déterminer le décalage angulaire, comme représenté à la figure 2.

En particulier, le capteur de position comporte un premier disque optique **D1** solidaire de l'axe d'entrainement **2** et une première tête de lecture **L1** fixée sur un support en vis-à-vis du premier disque optique **D1.** Le dispositif de vissage **1** comprend un second disque optique **D2,** solidaire de l'axe de vissage **3,** et une seconde tête de lecture **L2,** fixée sur un support en vis-à-vis du second disque optique **D2.**

Les codeurs de position **5b** s'entend ainsi comme tout couple de dispositifs permettant de déterminer un décalage angulaire. Ils peuvent être identiques l'un à l'autre ou bien complémentaire l'un de l'autre.

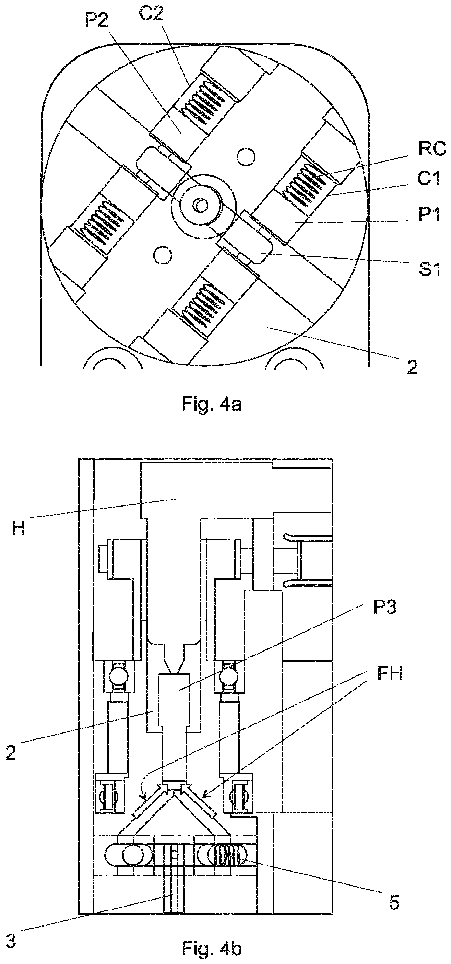

Selon un autre mode de réalisation, le décalage angulaire **A** est déterminé grâce à un système hydraulique **S,** tel que schématisé dans les figures 4a et 4b. Un tel système comporte au moins deux chambres hydrauliques **C1** et **C2,** munies chacune d'un piston **P1** et **P2** pouvant coulisser dans les chambres hydrauliques. Les chambres hydrauliques **C1** et **C2** sont remplies d'un fluide hydraulique **FH.** Sous l'effet des pistons **P1** et **P2,** le fluide hydraulique **FH** est poussé vers un autre piston **P3,** qui transmet l'effort à un palpeur **H.** Les pistons **P1** et **P2** sont orientés de manière transversale par rapport aux axes d'entrainement **2** et de vissage **3.** Ils sont de préférence en graphite pour limiter les frottements parasites. Un axe poussoir **S1** solidaire de l'un des axes d'entrainement **2** ou de vissage **3** est en contact avec les pistons **P1** et **P2** des chambres hydrauliques **C1** et **C2.** De cette manière l'effort de serrage est transmis aux pistons **P1** et **P2,** qui poussent le piston **P3** via le fluide hydraulique **FH.** L'effort de serrage est ainsi mesuré par le palpeur **H.** De manière avantageuse le piston **P3** et le palpeur **H** sont disposés de manière longitudinale aux axes d'entrainement **2** et de vissage **3,** pour optimiser l'encombrement du dispositif de vissage **1.** Les canaux de passage du fluide hydraulique **FH** permettent de transformer la poussée horizontale des pistons **P1** et **P2** en une poussée verticale vers le piston **P3.** Des chambres hydrauliques **C1** et **C2** sont disposées de part et d'autre de l'axe poussoir **S1** de manière à pouvoir mesurer l'effort de serrage selon les deux sens de rotation de l'axe d'entrainement **2.** Les chambres hydrauliques **C1** et **C2,** peuvent en outre être munies d'un ressort compensateur **RC.**

Le dispositif de vissage **1** selon l'invention peut comporter au moins un capteur de position angulaire **6** qui permette de déterminer la position angulaire **W** de la tête de vis **V.** Le capteur de position angulaire **6** peut être fixé sur le dispositif de vissage 1 ou intégré à celui-ci, ou bien être disposé sur un support externe au dispositif de vissage **1.** Le capteur de position angulaire **6** peut être par exemple un dispositif optique, par exemple une caméra, qui permette de visualiser l'orientation de la tête de vis **V** ou de l'outil de vissage **3** disposé à l'extrémité libre de l'axe de vissage **3.** L'extrémité libre de l'axe de vissage **3** s'entend comme étant l'extrémité non associée à l'axe d'entrainement **2.** L'outil de vissage **4** peut prendre la forme d'une lame faisant office de tournevis plat, ou bien d'une croix faisant office de tournevis cruciforme. D'autre formes sont bien entendues possibles et en relation avec la forme de la tête de vis **V.** Tout autre capteur équivalent peut être considéré pour les besoins de la présente invention, dans la mesure où il permet de déterminer la position angulaire **W** de la tête de vis **V.**

Le dispositif de vissage **1** de la présente invention comprend en outre une unité de traitement numérique **7.** Une telle unité de traitement numérique s'entend comme un microprocesseur, un circuit PFGA, ou Asic ou tout autre dispositif équivalent. L'unité de traitement numérique **7** reçoit les informations relatives au décalage angulaire **A** des axes d'entrainement **2** et de vissage **3,** déterminé par le codeur de position **5b.** En d'autres termes, l'unité de traitement numérique **7** reçoit le degré de déformation du moyen d'accouplement **5.** Encore en d'autres termes, l'unité de traitement numérique **7** est en mesure de déterminer un couple **F** relatif au serrage de la vis **V.**

L'unité de traitement numérique **7** peut également recevoir les données relatives à la position angulaire **W** de la tête de vis **V,** déterminées par le capteur de position angulaire **6.** Les données relatives au décalage angulaire **A** entre les axes d'entrainement **2** et de vissage **3,** et celles relatives à la position angulaire **W** de la tête de vis **V,** peuvent être transmises par tout moyen connu de transmission de signal.

l'unité de traitement numérique **7** peut générer une commande d'arrêt du moteur **M.** Ainsi, lorsque le couple de serrage atteint ou dépasse la valeur maximale acceptable **F2,** ou bien que l'angle de décalage **A** dépasse la valeur maximale **A2,** alors l'unité de traitement numérique est en mesure de stopper le moteur **M.** De manière avantageuse, l'unité de traitement numérique **7** est en plus connectée à, ou peut induire, la commande de réversion du moteur **M.** Dans ce cas, il permet de piloter le desserrage partiel de la vis **V** lorsque le couple de serrage maximal **F2** est atteint. Typiquement un desserrage de l'ordre d'un vingtième de tour, ou d'un dixième de tour, ou d'un cinquième de tour peut être ordonné au moteur **M.** Le desserrage d'une valeur préétablie différente peut être prévu.

Alternativement le desserrage peut être conduit jusqu'à ce que la tête de vis **V** atteigne la dernière position angulaire **W** acceptable franchie avant l'atteinte de la force de serrage maximale **F2.**

L'unité de traitement numérique **7** peut être connectée à, ou piloter, la commande de vitesse de vissage du dispositif de visage **1.** En l'occurrence, lorsque le couple de serrage minimal **F1** est atteint, une commande de ralentissement peut être envoyée au moteur de manière à maitriser la vitesse de vissage jusqu'à atteindre une position angulaire **W** acceptable de la tête de vis **V.** Dans ce cas, l'arrêt du moteur **M** intervient de manière concomitante avec l'atteinte de la position angulaire **W** requise, sans qu'il ne soit nécessaire de procéder à un desserrage.

L'unité de traitement numérique **7** peut en outre comporter une mémoire de stockage de données **7a.** La mémoire **7a** permet de stocker des valeurs de références telles que les positions angulaires **W** acceptables de la tête de vis **V,** et les valeurs limites acceptables du décalage angulaire **A** des axes d'entrainement **2** et de vissage **3,** ou bien les valeurs limites des couples de serrage minimal **F1** et maximal **F2,** déduites à partir des angles de décalage **A.** L'unité de traitement numérique **7** permet alors de comparer les valeurs déterminées par les codeurs de position **5b** et, le cas échéant, par le capteur de position angulaire **6,** avec les valeurs de référence stockées dans la mémoire **7a,** et de transmettre au moteur **M** les commandes adéquates.

L'unité de traitement numérique **7** peut en outre comprendre une mémoire tampon **7b,** permettant d'enregistrer par exemple une succession de mesures correspondant à une opération de vissage. En particulier, le nombre de fois qu'une position angulaire **W** est atteinte lors du vissage peut être stocké dans une telle mémoire de manière à déterminer la position de la vis au moment de l'arrêt du moteur **M.** Les valeurs de plusieurs opérations de vissage peuvent en outre être stockées dans une telle mémoire tampon **7b** de manière à pourvoir être consultées après coup, à des fins de vérification ou de contrôle qualité. Le suivi de chacune des vis manipulées peut alors établi.

La présente invention inclut une méthode de vissage, comprenant une étape a) de vissage d'une vis **V** au moyen du dispositif de vissage **1.** L'étape de vissage consiste essentiellement en l'entrainement de l'axe d'entrainement **2** par le moteur **M** dans le sens du vissage, lequel est généralement dans le sens des aiguilles d'une montre. Lors de cette étape de vissage, la vis **V** progresse dans le filet et les valeurs du décalage angulaire **A** entre les axes d'entrainement **2** et de vissage **3** et, le cas échéant, de la position angulaire **W** de la tête de vis **V,** sont mesurées de manière continue ou à des intervalles de temps prédéterminés. De tels intervalles de temps peuvent être inférieurs à la milliseconde. Dans le cas de mesures échelonnées dans le temps, les délais sont facilement adaptés à la vitesse de vissage est aux dimensions des vis **V.**

Alternativement, seul le passage par des valeurs de référence est comptabilisé. Par exemple le passage par une valeur de position angulaire **W** de la tête de vis **V** peut être comptabilisée. L'état d'avancement du vissage peut alors être évalué au nombre de fois qu'une position angulaire **W** est atteint. Concernant le décalage angulaire **A** entre les axes d'entrainement **2** et de vissage **3,** il est possible que seul le passage aux valeurs de serrage minimale **F1** et maximale **F2** soit détecté.

Selon la méthode de la présente invention, le décalage angulaire **A** entre les axes d'entrainement **2** et de vissage **3** est déterminé grâce au moyen d'accouplement déformable **5** et aux codeurs de position **5b** décrits plus haut. La position angulaire **W** des têtes de vis **V** est déterminée par le capteur de position angulaire **6.**

La présente méthode de vissage comporte une étape b) de comparaison des valeurs déterminées pendant l'étape a) de vissage avec un set de valeurs prédéterminées. En l'occurrence, les valeurs de décalage angulaire **A** peuvent être comparées avec les valeurs minimale **A1** et maximale **A2** correspondant à la plage de valeurs acceptable. D'autres valeurs de références peuvent être, alternativement ou en plus, prévues en fonction des besoins. Dans le sens de la présente invention, le terme « comparaison » inclut le cas où seules les valeurs de références sont comptabilisées. Les valeurs relatives à la position angulaire **W** de la tête de vis **V** sont également comparées aux positions angulaires acceptables prédéterminées. Les valeurs de références sont stockées dans la mémoire **7a** du processeur **7.** Des couples de valeurs acceptables sont prédéterminés et stockés dans la mémoire **7a.** De tels couples de valeurs comportent d'une part une valeur de décalage angulaire **A** entre les axes d'entrainement **2** et de vissage **3** et d'autre part une valeur acceptable de la position angulaire **W** de la tête de vis **V.** En particulier, un couple de valeurs acceptable est par exemple satisfait lorsque le couple de serrage **F** est compris entre un couple minimal **F1** et un couple maximal **F2** et que la position angulaire **W** de la tête de vis **V** correspond à la position acceptable préétablie. Un couple de valeurs acceptable est alternativement satisfait lorsque le décalage angulaire **A** est compris entre un angle minimal **A1** et un angle maximal **A2,** et que la position angulaire **W** de la tête de vis **V** correspond à la position acceptable préétablie.

Selon les besoins, un serrage peut être considéré acceptable s'il ne satisfait qu'une des deux conditions relatives à la position angulaire **W** de la tête de vis **V** et au décalage angulaire **A** des axes d'entrainement **2** et de vissage **3.**

Cette étape b) de comparaison des valeurs peut comprendre une étape b1) de comparaison avec une première valeur de référence et une étape b2) de comparaison avec une seconde valeur de référence. Par exemple, l'étape b1) peut être dédiée à la détermination du décalage angulaire **A** entre les axes d'entrainement **2** et de vissage **3.** Lorsqu'une valeur de référence telle que l'angle minimal de décalage **A1,** ou la force de serrage minimale **F1,** est atteinte, alors une étape b2) de comparaison de l'autre valeur de référence, telle que la position angulaire **W** de la tête de vis **V,** peut être initiée. L'ordre des étapes b1) et b2) peut être inversé, de telle manière que la détection de la position angulaire **W** de la tête de vis **V** est d'abord effectuée avant de vérifier si la valeur de serrage est comprise entre les couples de serrages minimal **F1** et maximal **F2,** ou si le décalage angulaire **A** est compris entre la valeur minimale **A1** et la valeur maximale **A2.**

De manière optionnelle, une commande du moteur **M** peut être transmise entre les deux étapes b1) et b2). Cela peut être par exemple une commande de ralentissement de la vitesse de vissage, lorsqu'une première valeur de référence est atteinte, de manière à stopper le moteur au moment où la seconde valeur de référence est atteinte. Une commande de réversion du sens de rotation peut alternativement ou en plus être transmise au moteur **M** lors de l'atteinte d'une valeur de référence, telle que la force maximale de serrage **F2** ou le décalage angulaire maximal **A2.**

La présente méthode comporte une étape c) d'arrêt de l'entrainement du moteur **M** lorsque les deux valeurs relatives au décalage angulaire **A** entre les axes d'entrainement **2** et de vissage **3** et à la position angulaire **W** de la tête de vis **V,** correspondent à un couple de valeurs acceptable.

La méthode de vissage selon l'invention peut en outre comporter des étapes de déplacement du dispositif de vissage **1** depuis le présentoir **P** vers la table de travail **T,** et une étape de préhension de la vis **V** à visser, notamment au moyen du système d'aspiration **8.**

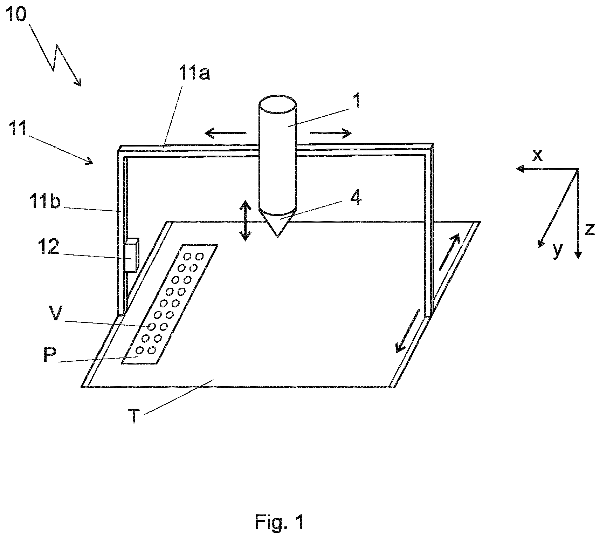

La présente invention inclut également un ensemble de travail **10,** tel que schématisé dans la figure 1, comprenant le dispositif de vissage **1** et un portique **11** permettant le déplacement du dispositif de vissage **1,** selon un ou plusieurs des axes x, y, et z. En particulier, selon un exemple de réalisation, le portique **11** comporte une traverse **11a** disposée au-dessus d'une table de travail **T,** de préférence horizontale et délimitant un plan xy, où les éléments à assembler sont disposés. La traverse **11a** fait office de guide permettant au dispositif de vissage **1** de se déplacer latéralement selon la direction x au-dessus de la table de travail **T.** Le portique **11** comporte en outre 2 piliers **11b** pouvant être fixés sur la table de travail **T** de manière à être mobiles selon la direction y, orthogonale à la direction x. Le dispositif de visage **1,** ou une partie du dispositif de vissage **1** est en outre mobile selon la direction z, orthogonale au plan xy formé par la table de travail **T.** Un présentoir **P** comportant les vis à visser peut être disposé sur la table de travail **T** de manière à être accessible par le dispositif de vissage **1** lors de ses déplacements, et en particulier par l'outil de vissage **4.** L'ensemble de travail **10** peut en outre comprendre un dispositif optique **12,** tel qu'une caméra, permettant de contrôler l'orientation de la tête de vis **V** lors de l'opération de vissage. Le dispositif optique **12** peut en plus ou alternativement permettre de contrôler les mouvements du dispositif de vissage **1** et/ou l'orientation de l'outil de vissage **4** de manière à ce qu'il s'aligne avec la tête de vis au moment de sa préhension sur le présentoir **P.**

Le dispositif de vissage **1** est utilisé dans l'ensemble de travail **10,** pour le vissage automatisé d'éléments à assembler, à un couple de force de serrage préétabli avec une orientation angulaire des vis préétablie.

### Numéros de référence employés sur les figures

(1) Dispositif de vissage automatique
(2) Axe d'entrainement
(3) Axe de vissage,
(4) Outil de vissage,
(5) Moyen d'accouplement élastique
(5a) Dispositif déformable
(5b) Codeurs de position
(6) Capteur de position angulaire
(7) Unité de traitement numérique
(7a) Mémoire
(7b) mémoire tampon
(8) Elément de préhension par aspiration
(10) ensemble de travail
(11) Portique
(11a) Traverse
(11b) Piliers
(12) Dispositif optique
(A)Angle de décalage
(A1) Angle de décalage minimal
(A2) Angle de décalage maximal
(F) Force de serrage
(FH) Fluide hydraulique
(F1) Couple de serrage minimal
(F2) Couple de serrage maximal
(R) Ressort spirale
(R1) Premier point de fixation
(R2) Second point de fixation
(RC) Ressort de compensation
(C1), (C2) Chambres hydrauliques
(P1), (P2), (P3) Pistons
(L1), (L2) Têtes de lectures
(D1), (D2) Disques optiques
(M) Moteur
(S) Système hydraulique
(S1) Axe poussoir
(V) Vis à visser
(Z1) Zone centrale
(Z2), (Z3) Bras circulaires et flexibles
(P) Présentoir
(T) Table de travail
(W) Position angulaire de la tête de vis V

## Revendications

1. Un dispositif de vissage (1) comprenant un axe d'entrainement (2) entraîné en rotation par un moteur (M), un axe de vissage (3), disposé dans la continuité de l'axe d'entrainement (2) et comprenant à son extrémité libre un outil de vissage (4), **caractérisé en ce que** ledit dispositif de vissage (1) comporte :
- un dispositif déformable (5), solidaire des axes d'entrainement (2) et de vissage (3),
- au moins un codeur de position permettant de déterminer le degré de déformation du dispositif déformable (5),
- une unité de traitement numérique (7) connectée audit au moins un codeur de position,
- au moins un capteur de position angulaire (6) de l'outil de vissage (4), connecté à ladite unité de traitement numérique (7),
le dispositif déformable (5) étant un ressort de type spirale (R), comportant un premier point de fixation (R1) et au moins un second point de fixation (R2), le premier point de fixation (R1) étant destiné à fixer ledit ressort spirale (R) à l'un des deux axes d'entrainement (2) ou de vissage (3) et le au moins un second point de fixation (R2) étant destiné à fixer ledit ressort spirale (R) sur l'autre des deux axes d'entrainement (2) ou de vissage (3), ou bien le dispositif déformable (5) étant un système hydraulique (S), comprenant au moins deux chambres hydrauliques (C1), (C2), remplies d'un fluide hydraulique (FH) pourvues chacune d'un piston (P1), (P2), lesquels sont activés par un axe poussoir (S1) solidaire de l'un des axes d'entrainement (2) et de vissage (3),
- et le au moins un capteur de position angulaire (6) est un capteur optique, par exemple une caméra, permettant de déterminer la position angulaire (W) de la tête de vis (V).

2. Dispositif de vissage selon la revendication 1, **caractérisé en ce que** ledit ressort spirale (R) comporte une zone centrale (Z1) et deux bras circulaires et flexibles (Z2) et (Z3), où le premier point de fixation (R1) se trouve au centre de la zone centrale (Z1) et où les deux seconds points de fixation (R2) se trouvent à l'extrémité de chacun des bras circulaires et flexibles (Z2) et (Z3).

3. Dispositif selon la revendication 1 ou 2, **caractérisé en ce que** ledit dispositif déformable (5) est ledit ressort de type spirale (R) et le au moins un codeur de position comporte un disque optique (5b) associé à l'un des axes d'entrainement (2) et de vissage (3) et une tête de lecture fixe disposée en vis-à-vis du disque optique.

4. Dispositif selon l'une des revendications 1 ou 2, **caractérisé en ce que** ledit dispositif déformable (5) est ledit système hydraulique (S), et le au moins un codeur de position comporte un piston (P3) activé par le fluide hydraulique (FH) des chambres hydrauliques (C1), (C2) et un palpeur (H).

5. Dispositif selon l'une ou l'autre des revendications précédentes, **caractérisé en ce que** l'unité de traitement numérique (7) est agencée pour générer une commande d'arrêt du moteur (M).

6. Dispositif selon l'une ou l'autre des revendications précédentes, **caractérisé en ce que** ladite unité de traitement numérique (7) comporte une mémoire (7a) où sont stockées des couples de valeurs ou de plage de valeurs acceptables, relatives à la position angulaire mesurée par le capteur de position angulaire (6) et à la déformation du dispositif déformable (5) mesurée par les codeurs de position (5b).

7. Dispositif selon l'une ou l'autre des revendications précédentes, **caractérisé en ce qu'**il comporte en outre un élément de préhension par aspiration (8), des vis (V) à visser.

8. Ensemble de travail (10), comprenant le dispositif selon l'une ou l'autre des revendications 1 à 7, un portique (11) permettant le déplacement dudit dispositif, une table de travail (T) et un présentoir (P).

9. Méthode de vissage automatique, comportant les étapes de
a) Entrainement de l'axe d'entrainement (2) par un moteur (M),
b) Détermination du degré de déformation du dispositif déformable (5) par au moins un codeur de position,
c) Comparaison des valeurs déterminées à l'étape b) avec un seuil de valeur prédéterminée relatives à la déformation du dispositif déformable (5),
d) Arrêt de l'entrainement de l'axe d'entrainement (2) lorsque les valeurs déterminées à l'étape b) atteignent ledit seuil de valeur prédéterminée.

10. Méthode selon la revendication 9, comprenant en outre une étape de détermination de la position angulaire (W) de l'outil de vissage (4) par au moins un capteur de position angulaire (6).
